# EUROPEAN PATENT APPLICATION

(11) **EP 2 757 498 A1**
(43) Date of publication of application: **23.07.2014**
(21) Application number: 13151400.2
(22) Date of filing: 16.01.2013
(51) Int. Cl.: G06F 21/57

(54) **Security agent for an endpoint device of a control system**

(71) Applicant: ABB Research Ltd., 8050 Zürich (CH)
(72) Inventor: Hadeli, Hadeli, 5400 Baden (CH); Alvarez, Fernando, 5417 Untersiggenthal (CH); Obermeier, Sebastian, 5107 Schinznach-Dorf (CH); Locher, Thomas, 8050 Zürich (CH); Hristova, Ana, 5400 Baden (CH)
(74) Representative: ABB Patent Attorneys

(57) **Abstract**

A method for controlling the security settings of an electronic endpoint device (12) of an industrial control system (10) comprises the steps of: receiving a command to implement new security settings in the endpoint device (12); retrieving new security baseline information (50) for the electronic endpoint device (12), wherein the new security baseline information (50) comprises security settings for at least one component of the endpoint device; generating implemented security baseline information (52) from the implemented security settings of components (28) of the endpoint device (12); comparing the new security baseline information (50) and the implemented security baseline information (52); and implementing new security settings in the endpoint device (12) based on the new security baseline information (50), when the new security baseline information (50) and the implemented security baseline information (52) are not equal.

## Description

### FIELD OF THE INVENTION

The invention relates to the field of cyber security of industrial control systems. In particular, the invention relates to a method, a computer program and a computer-readable medium for controlling the security settings of an electronic endpoint device. The invention relates further to an electronic endpoint device and an industrial control system.

### BACKGROUND OF THE INVENTION

Industrial control systems usually comprise a plurality of electronic devices that are interconnected by a communication network. These electronic devices comprise endpoint devices that may be responsible for the control of actuators and sensors of the industrial control system. Since the communication network of the industrial control system is often connected to external large scale networks like the internet, either via a corporate network or directly, security problems may arise.

Endpoint security subsumes the concept that each endpoint device is responsible for its own security. However, in the current application realm of industrial control systems, endpoint devices such as Intelligent Electronic Devices IEDs, Remote Terminal Units RTUs, controllers, Programmable Logic Controllers PLCs, servers and engineering computers are mostly secured in an ad-hoc way.

International standards such as IEC 62351 part 7 have defined the concept of a Network Management System (NMS) data object model, which attempts to cover security information from the endpoint devices in substation automation systems.

### DESCRIPTION OF THE INVENTION

The application of cyber security in an industrial control system is often focused on applying security at the perimeters in order to close possible known attack vectors. The perimeters of the industrial control may be seen as the most outer layer of the industrial control system that interacts with non-industrial control system elements (for instance an office environment). The perimeters of the industrial control system are usually provided by firewalls, intrusion prevention systems, gateways and/or routers. However, it may be equally important to ensure that cyber security is properly applied as well at the endpoint devices.

It is an object of the invention to simplify configuration and maintenance of a secure industrial control system.

This object is achieved by the subject-matter of the independent claims. Further exemplary embodiments are evident from the dependent claims and the following description.

An aspect of the invention relates to a method for controlling the security settings of an electronic endpoint device of an industrial control system. The industrial control system may comprise actuators and sensors that control an industrial process. For example, the industrial control system may be part of a power plant, a substation or a factory, the actuators may be switches, generators or motors, the sensors may be sensors for measuring voltages, currents and other physical properties of the industrial process to be controlled.

According to an embodiment of the invention, the method comprises the steps of: receiving a command to implement new security settings in an endpoint device that includes a plurality of components with individual security settings; retrieving new security baseline information for the electronic endpoint device, wherein the new security baseline information comprises security settings for at least one component of the endpoint device; generating or deriving implemented, or current/actual, security baseline information from the implemented security settings of components of the endpoint device; comparing the new security baseline information and the implemented security baseline information; and implementing new security settings in the endpoint device based on the new security baseline information, when the new security baseline information and the implemented security baseline information are not equal.

Summarized, the security settings of an electronic endpoint device may be set based on security baseline information, i.e. information that is not tailored to the specific type of endpoint device, but may be used for defining the security settings of a plurality of different types of electronic endpoint devices. Security baseline information may be seen as security data that is stored and/or presented in such a general form that a plurality of electronic endpoint devices may be configured with this information. The specific security settings of the electronic endpoint device may be read from the components of the electronic endpoint device, from which implemented security baseline information is derived and subsequently stored and processed in the same form as other security baseline information. In this way, the implemented security settings of the electronic endpoint device are comparable to new security settings that are defined by the new security baseline information, so that it is possible to derive which security settings of the electronic endpoint device may have to be changed to arrive at the security settings defined by the new security baseline information. Security information may include settings or parameters indicative of password expiration limits, host firewall rules, user account management, audit logs, usage of secure protocols, usage of encryption, integrity protection, and the like.

According to an advantageous embodiment of the invention the new security settings are provided by an adaptive hardening system for adaptively adjusting a security level in the endpoints and network devices of the industrial control system. Based on current process conditions including information about the current network condition and process state as well as expected system functioning and anticipated traffic, the adaptive hardening system discovers possible disruptions that may jeopardize the continuity of the process. If the current process condition threatens the availability of a complete production line, the hardening system has the ability to correlate it to specific hardening settings and determine the changes needed in the security settings of the devices that could alleviate this condition, including a temporary defusing of previously active security settings.

For this purpose, the adaptive hardening system is capable to adjust the security settings of specific endpoint devices (e.g., PLCs, IEDs, HMI) as well as network devices (e.g., firewalls, switches) of the industrial control system, and enforce them automatically or upon administrator's approval. By way of example, in case an engineering workstation infected with malware tries to send an overwhelming number of ping packets to the controller A with the intent to make the controller A unavailable and unresponsive, the change in security settings stipulates that all ICMP packets coming from the engineering workstation of type "echorequest" must be dropped. The reconfiguration (e.g., of firewall rules, firewall state, user account management, password expiration limit, audit logs, usage of secure protocols, usage of encryption, integrity protection etc.) is carried out according to the following rules:
- There is an absolute minimum security level provided by security settings that must remain intact independent of the process condition. This minimum security level ensures that critical security-related settings are not changed, even if some settings may be detrimental to the process.

- All other security settings may be turned off if they jeopardize the correct functioning of the process. The system turns off the minimum number of these dispensable security settings so as to ensure the maximum availability and continuous operation of the process.

It has to be noted that implementing or applying the security settings to the electronic endpoint devices is often referred to as hardening of the electronic endpoint device. Thus, security baseline information may be seen as hardening information of the electronic endpoint device.

The method may provide an automated, thorough, and systematic way to enforce cyber security settings at the endpoint device and may continuously maintain the security state of the endpoint device based on the latest currently implemented security settings of the endpoint devices and across the overall industrial system, when the method is performed for all electronic endpoint devices.

The method may be seen as an automation mechanism that performs the enforcement of cyber security hardening at the endpoints of an industrial control system.

Endpoint devices may receive the ability to automatically audit their security settings and harden the system and thus ensure endpoint security based on general security information, i.e. the new security baseline information. The overall industrial control system as a whole may become more resilient against cyber-attacks. Reducing the risk of successful attacks may result in significant cost savings. In addition, this approach also reduces unnecessary deviations between planned and deployed security settings and decreases the risk for unintentional errors. And finally, it may reduce the time that an engineer would otherwise need to spend in configuring the security settings of each electronic control device individually.

According to an embodiment of the invention, the new security baseline information is retrieved from a remote device. The new security baseline information may be read or retrieved from different information sources, for example from centrally available information (such as a dedicated server or a database), and/or from peer real-time information (for example from neighbouring electronic endpoint devices).

According to an embodiment of the invention, the method further comprises the step of: generating discrepancy information between the new security baseline information and the implemented security baseline information. When the new and the implemented security baseline information are available in the same form of data (for example with an equivalent file structure or data format), differences between the two sets of information may be generated and stored as discrepancy information.

According to an embodiment of the invention, the method further comprises the step of: implementing the new security settings by applying the discrepancy information. Since the discrepancy information indicates the differences between the implemented security settings of the electronic endpoint device and the security settings that should be applied according to the new security baseline information, only the security settings indicated by the discrepancy information have to be changed.

According to an embodiment of the invention, the new security baseline information comprises settings, whether a component of the endpoint device is to be enabled or is to be disabled and the implemented baseline information comprises settings, whether a component of the endpoint device is enabled or disabled. For example, each type of security baseline information may comprise a list of entries, each of which describes that a specific component associated with this entry is enabled or disabled.

According to an embodiment of the invention, the new security baseline information and the currently implemented baseline information are stored in XML format. The above mentioned list of entries may be encoded in a text file in XML format.

According to an embodiment of the invention, the method further comprises the steps of: reading updated security baseline information after the new security settings have been implemented in the electronic endpoint device; comparing the new security baseline information and the updated security baseline information; and reporting that the implementation of the new security baseline information has failed, when the new security baseline information and the updated security baseline information are not equal. It may be possible that the implementation of some or all new security settings fails. In this case, a standardized report may be generated that may provide information about a failed change of security settings.

According to an embodiment of the invention, the method further comprises the step of: regularly checking, whether actual security baseline information and implemented security baseline information are equal. For example, after the implementation of new security settings, the new security baseline information may be stored as actual security baseline information. After that, it may be tested in regular time intervals, whether the implemented security setting of the electronic endpoint devices still comply with the actual security baseline information. For example, when some of the security settings have changed do to an illegal access to the electronic endpoint device, automatically a report may be generated that indicates an undesired change of security settings.

According to an embodiment of the invention, components of the endpoint device, that have security settings, comprise at least one of a user account, a protocol, a port, a service, an application of the endpoint device. When the new security baseline information is implemented in the electronic endpoint device, user accounts, protocols, ports and/or services may be enabled and disabled. Furthermore, application-specific security settings may be changed.

According to an embodiment of the invention, the steps of the method are performed by a security agent module executed in the endpoint device. The security agent module may be seen as an extension module to the NMS model mentioned in the beginning. The security agent module may be a piece of software installed in the electronic endpoint device.

The security agent module may have the ability to check the discrepancy between the current security state (i.e. the currently implemented security settings) and the desired security state (which is defined by the new security baseline information). If there is a discrepancy, the corresponding security settings are (re-)enforced at the endpoint device. Moreover, the security agent module may automatically generate a report, compatible to a predefined standard, about its findings and actions.

According to an embodiment of the invention, the electronic endpoint device is a controller of the industrial control system that is adapted for controlling an actuator of the industrial control system and/or that is adapted for receiving measurement data of a sensor of the industrial control system. For example, the electronic endpoint devices may be an intelligent electronic device (IED), a remote terminal unit (RTU) or a programmable logic controller (PLC).

A further aspect of the invention relates to a computer program, which, when executed by a processor of an electronic endpoint device, is adapted for carrying out the steps of the method as described in the above and in the following.

A further aspect of the invention relates to a computer-readable medium, in which such a computer program is stored. A computer-readable medium may be a non-volatile computer-readable medium like a floppy disk, a hard disk, an USB (Universal Serial Bus) storage device, a RAM (Random Access Memory), a ROM (Read Only Memory) and an EPROM (Erasable Programmable Read Only Memory). A computer-readable medium may also be a data communication network, e.g. the Internet, which allows downloading a program code.

A further aspect of the invention relates to an electronic endpoint device of an industrial control system, which is adapted for performing the method as described in the above and in the following. For example, a security agent module as described above and in the following may be installed in the electronic endpoint device.

A further aspect of the invention relates to an industrial control system, which comprises a plurality of electronic endpoint devices associated with sensors and/or actuators of the industrial control system. Each electronic endpoint device may comprise a security agent module as described above and in the following.

It has to be understood that features of the method as described in the above and in the following may be features of the computer program, the computer-readable medium, the endpoint device and the industrial control system as described in the above and in the following and vice versa.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows an industrial control system according to an embodiment of the invention.
Fig. 2 schematically shows an endpoint device according to an embodiment of the invention.
Fig. 3 shows a flow diagram for a method for controlling the security settings of an electronic endpoint device according to an embodiment of the invention.

In principle, identical parts are provided with the same reference symbols in the figures.

### DETAILED DESCRIPTION OF EXEMPLARY EMBODIMENTS

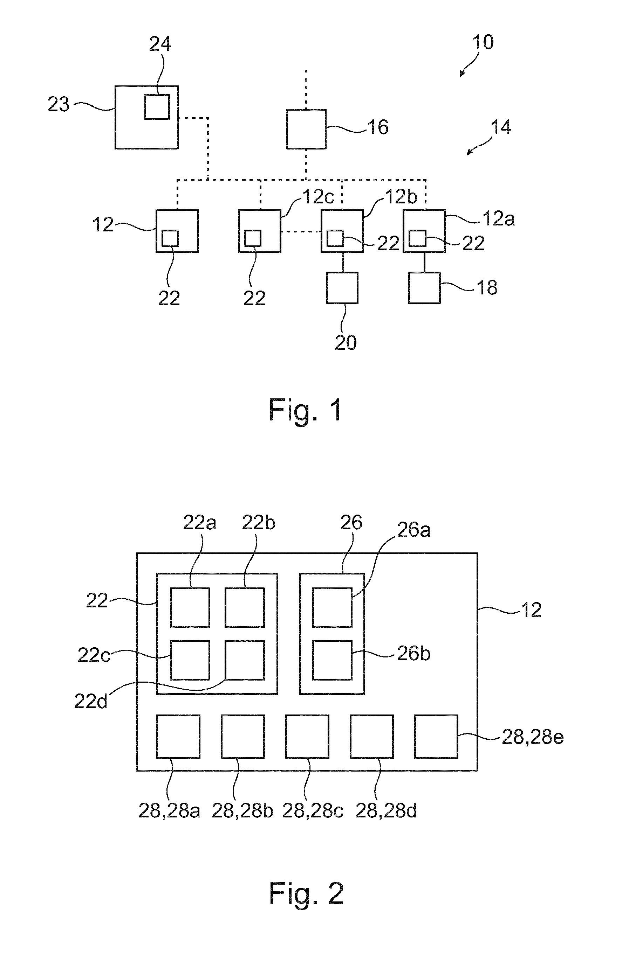

Fig. 1 shows an industrial control system 10, which comprises a plurality of endpoint devices 12 that are interconnected via a communication network 14.

The communication network 14 may comprise a gateway 16 that interconnects to industrial control system 10 with external devices, for example computers of an office environment.

The endpoint devices 12 may comprise an Intelligent Electronic Device (IED) 12a, for example for controlling an actuator 18, a Remote Terminal Unit (RTU) 12b, for example for receiving measurement data from a sensor 20, and a Programmable Logic Controller (PLC) 12c. In general, an endpoint device 12 may be any kind of controller of the industrial control system 10.

Each of the endpoint devices 12 comprises a security agent module 22 that is responsible for implementing and monitoring the security settings of the respective endpoint device 12.

The industrial control system 10 may further comprise a central server 23, which may host a database 24 that stores security baseline information for the industrial control system 10 and/or the endpoint devices 12.

Fig. 2 shows an endpoint device 12 in more detail. The endpoint device 12 comprises the security agent module 22, a security baseline storage 26, and a number of applications and operating system components 28, like services and ports 28a, libraries 28b, user accounts 28c, protocols 28d and audit logging policies 28e. The components 28 all may have security settings that are set, modified and monitored by the security agent module 22, which may use the security baseline information in the storage 26 and/or the security baseline information stored in the database 24.

The security baseline storage 26 may store actual security baseline information 26a that, for example, may be set and read by the security agent module 22 and factory security baseline information 26b that may be read by the security agent module 22, but may not be modified by the security agent module 22.

The security agent module 22 comprises a security information receiver module 22a that is adapted for receiving security information from external and internal sources. For example, the security information receiver module 22a may read the actual security baseline information 26a and the factory security baseline information 26b or may read security baseline information from the database 24.

It is also possible that the security information receiver module 22a receives security baseline information that is sent by an external device, for example from another endpoint device 12 and/or a computer of an engineer.

The security agent module 22 comprises a security information comparator module 22b that is adapted for comparing security baseline information with the actual security settings of the endpoint device 12, i.e. the components 28. For example, the security information comparator module 22b may compare new security baseline information that may be received from the database 24 or an external device with the settings of the endpoint device 12.

The security information comparator module 22b may be adapted to read the security settings of the components 28 of the endpoint device 12 and may process these settings to generate (implemented) security baseline information from these settings.

The security agent module 22 comprises a security policy enforcer module 22c that is adapted for implementing security baseline information in the endpoint device 12. For example, the security agent module 22 may modify or implement the security settings of the components 28 in such a way such that they comply with the security baseline information.

The security agent module 22 may apply security relevant changes (settings) to the underlying operating system and the applications running the endpoint device 12. For example, some applications may offer the possibility to be configured via a special protocol. This protocol may be deactivated only via the application, but not via the operating system. In contrast, some operating system features (for example FTP) may only be deactivated using the operating system, not the running application. In such a way, the security agent may implement all security settings of the endpoint device 12.

The security agent module 22 may comprise an autonomous security checking module 22d that is adapted for regularly checking, whether the security settings of the endpoint device (i.e. the security settings of the components 28) comply with the actual security baseline information 26a.

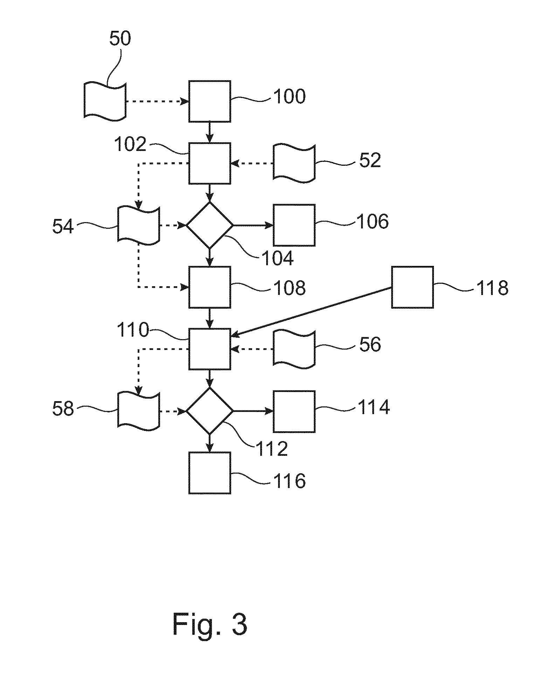

Fig. 3 shows a flow diagram for a method that may be performed by the security agent module 22 and its sub-modules 22a, 22b, 22c, 22d.

In step 100, a command is received in the endpoint device 12 to harden the device 12, i.e. to apply or implement new security settings. For example, the command may be sent from a computer of an engineer, which wants to reconfigure a part or all of the industrial control system 10.

For example, together with the command, the security information receiver module 22a receives new security baseline information 50 for the endpoint device 12 that is sent together with the message. It is also possible that the security information receiver module 22a retrieves this information from a local or remote source, for example from the database 24. The new security baseline information 50 may be a new with respect to the endpoint devices 50, for example, when it is retrieved from an external source, or it may be already stored in the endpoint device 12. For example, the security information receiver module 22a may use the actual security baseline information 26a or the factory security baseline information 26b as new security baseline information 50.

In particular, the new security baseline information 50 may come from the vendor or the customer of the endpoint device. It is possible that the vendor provides the recommended security baseline information, also if the endpoint device 12 is already deployed at the site of the costumer.

The received new security baseline information 50 may be stored as the actual security baseline information 26a.

In step 102, the security information receiver module 22a passes the information to the security information comparator module 22b. The security information comparator module 22b initiates a check towards the endpoint device 12 and populates (i.e. generates) the security status of the currently implemented security settings and outputs the differences between the currently implemented settings and the desired settings defined by the new security baseline information 50.

In particular, the security information comparator module 22b retrieves real-time information from the endpoint device 12, i.e. the currently implemented security settings of the components 28 and generates implemented security baseline information 52 from these security settings. The implemented security baseline information 52 may have the same data format as the new security baseline information 50.

After that, the security information comparator module 22b may generate discrepancy information 54 from the two sets of security baseline information 50, 52. Also the discrepancy information 54 may have the same data format as the security baseline information 50, 52.

As an example, the new security baseline information 50 may comprise an entry such that a specific component 28 of the endpoint device 12 has to be enabled. The implemented security baseline information 52 indicates that this component 28 is disabled. The discrepancy information 54 then will have an entry that indicates that this component has to be enabled for the endpoint device 12.

In step 104, the security information comparator module 22b compares the new security baseline information 50 with the implemented security baseline information 52. For example, it may check, whether the discrepancy information 54 is empty or not.

Steps 102 and 104 may be seen as a first security compliance check. A similar security compliance check will be performed in steps 110, 112 below.

In step 106, if there is no difference between the new security baseline information 50 and the implemented security baseline information 52, the method terminates. In this step, the security information comparator module 22b may report that the endpoint device 12 complies to the new security baseline information 50. This report may be sent to a central device (for example to the database 24 or to the computer of an engineer who remotely configures the endpoint device 12).

In the other case, in step 108, the security information comparator module 22b reports that the endpoint device 12 does not comply with the received baseline information 50. This report may be sent to a central device (for example to the database 24 or to the computer of an engineer who remotely configures the endpoint device 12).

In step 108, the new security baseline information 50 is used to harden the endpoint device 12 and security policy enforcer module 22c performs a security hardening operation on the endpoint device 12, i.e. tries to modify the security settings of the components 28 of the endpoint device 12 in such a way that they comply to the new baseline security settings 40.

For example, the discrepancy information 54 may be passed over to the security policy enforcer module 22c and the security discrepancy information 54 may be used for modifying the security settings. For example, the discrepancy information 54 may comprise an entry that a specific component 28 of the endpoint device 12 has to be enabled or disabled. The security policy enforcer module 22c will then enable or disable the specific component 28 by modifying its security settings accordingly.

In steps 110, 112, a further, second security compliance check is performed by the security information comparator module 22b.

In step 110, the security information comparator module 22b retrieves real-time information from the endpoint device 12 again and generates second implemented security baseline information 56.

According to step 102, the security information comparator module 22b may generate second security discrepancy information 58.

In step 112, the security information comparator module 22b compares the implemented security baseline information 56 with the new security baseline information 50, for example with the actual security baseline information 26a, in which the new security baseline information 50 has been stored.

Again it may be checked, whether the security discrepancy information 58 is empty or not.

In step 114, if the two sets of security baseline information 50, 56 are not equal, it is reported that the hardening has failed. This report may be sent to a central device (for example to the database 24 or to the computer of an engineer who remotely configures the endpoint device 12).

In step 116, if the two baselines are equal, it is reported that the hardening is completed and has succeeded. Also this report may be sent to a central device (for example to the database 24 or to the computer of an engineer who remotely configures the endpoint device 12).

Step 118 may be performed by the autonomous security checking module 22d in regular intervals. The autonomous security checking module 22d may be a daemon module that runs continuously in the endpoint device 12 and from time to time triggers (in step 118) the security information comparator module 22b to perform a comparison between the currently implemented security state and the security state that should be implemented. Optionally, an alert (step 114) may be generated if a difference between these two states is detected.

The security baseline information 50, 52, 56 and the discrepancy information 54, 58 is presented in a machine-readable format. For example, this information may be stored in an XML-base form.

In the following, an example for a new security baseline information 50 for securing an endpoint device 12, in this case an IED, which is based on XML, is shown:

```
 <baseline ied="ABC" entityID="AA0123B12" ver="2.0">
       <user account>
               <user>
                      <id>10983<lid>
                      <name>johndoe</name>
                      <state>disable</state>
              </user>
              <user>
                      <id>00000</id>
                      <name>defname</name>
                      <state>disable</state>
              </user>
              <user>
                      <id>8879</id>
                      <name>alexwalter</name>
                      <state>enable</state>
              </user>
       </user account>
       <service>
              <service>
                      <name>FTP</name>
                      <protocol>TCP</protocol>
                      <port>21 </port>
                      <state>disable</state>
              </service>
              <service>
                      <name>HTTP</name>
                      <protocol>TCP</protocol>
                      <port>80</port>
                      <state>disable</state>
              </service>
              <service>
                      <name>HTTPS</name>
                      <protocol>TCP</protocol>
                      <port>443</port>
                      <state>enable</state>
              </service>
       <services>
 </baseline>
```

This security baseline information 50 may be used for hardening a particular IED type "ABC" and entityID= "AA0123B12". Individual users and services may be enabled and disabled. Any user that has the "disabled" value in the "state" description does not have access to the endpoint device 12. Likewise, any service that is not enabled must not run in the endpoint device 12. The purpose of the "disable" state is to facilitate the automated implementation of security settings: A user or service having the "disable" state used to be active, and therefore the security agent 22 must explicitly test whether this user or service is now disabled. Another use case for the "disable" state is disabling a specific user while the group it belongs to is enabled. Thus, in this case, the specific disabling overrules the more general enabling of the group.

When in step 100 a command to harden a system is sent out to the endpoint device 12, the security agent module 22 will retrieve the security settings and generate the implemented security baseline information 52 from the endpoint device 12. In the following, an example for the generated baseline information 52:

```
 <baseline ied="ABC" entityID="AA0123B12" ver="current">
       <user account>
              <user>
                      <id>00000</id>
                      <name>defname</name>
                      <state>disable</state>
              </user>
              <user>
                      <id>8879</id>
                      <name>alexwalter</name>
                      <state>enable</state>
              </user>
              <user>
                      <id>10983<lid>
                      <name>johndoe</name>
                      <state>enable</state>
              </user>
              <user>
                      <id>78549</id>
                      <name>timdalton</name>
                      <state>enable</state>
              </user>
       </user account>
       <service>
              <service>
                      <name>FTP</name>
                      <protocol>TCP</protocol>
                      <port>21 </port>
                      <state>disable</state>
              </service>
       <service>
                      <name>HTTP</name>
                      <protocol>TCP</protocol>
                      <port>80</port>
                      <state>disable</state>
              </service>
              <service>
                      <name>HTTPS</name>
                      <protocol>TCP</protocol>
                      <port>443</port>
                      <state>enable</state>
              </service>
              <service>
                      <name>Telnet< /name>
                      <protocol>TCP</protocol>
                      <port>443</port>
                      <state>enable</state>
              </service>
              <service>
                      <name>unknown</name>
                      <protocol>UDP</protocol>
                      <port>666</port>
                      <state>enable</state>
              </service>
              <service>
                      <name>unknown</name>
                      <protocol>TCP</protocol>
                      <port>666</port>
                      <state>enable</state>
              </service>
       <services>
 </baseline>
```

In step 104, the security agent module 22 compares the current ("current") version to the desired next state ("2.0"). A corresponding discrepancy information 54 may have the form of the following XML document:

```
 <baseline ied="ABC" entitylD="AA0123B12" ver="diff">
       <user account>
              <changestate>
              <user>
                      <id>10983</id>
                      <name>johndoe</name>
                      <state>disable</state>
              </user>
              </changestate>
              <remove>
              <user>
                      <id>78549</id>
                      <name>timdalton</name>
                      <state>enable</state>
              </user>
              </remove>
       </user account>
       <services>
       <remove>
              <service>
                      <name>Telnet</name>
                      <protocol>TCP</protocol>
                      <port>443</port>
                      <state>enable</state>
              </service>
              <service>
                      <name>unknown</name>
                      <protocol>TCP</protocol>
                      <port>666</port>
                      <state>enable</state>
              </service>
              <service>
                      <name>unknown</name>
                      <protocol>UDP</protocol>
                      <port>443</port>
                      <state>enable</state>
              </service>
       </remove>
       <services>
 </baseline>
```

In step 108, the security agent module 22 applies the changes to the security settings, which are encoded in the discrepancy information 54 to the endpoint device 12.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for controlling the security settings of an electronic endpoint device (12) of an industrial control system (10), the method comprising the steps of:
receiving a command to implement new security settings in the endpoint device (12);
retrieving new security baseline information (50) for the electronic endpoint device (12), wherein the new security baseline information (50) comprises security settings for at least one component of the endpoint device;
generating implemented security baseline information (52) from the implemented security settings of components (28) of the endpoint device (12);
comparing the new security baseline information (50) and the implemented security baseline information (52);
implementing new security settings in the endpoint device (12) based on the new security baseline information (50), when the new security baseline information (50) and the implemented security baseline information (52) are not equal.

2. The method of claim 1,
wherein the new security baseline information (50) is retrieved from a remote device (24).

3. The method of claim 1 or 2, further comprising the step of:
generating discrepancy information (54) between the new security baseline information (50) and the implemented security baseline information (52).

4. The method of claim 3, further comprising the step of:
implementing the new security settings by applying the discrepancy information (54).

5. The method of one of the preceding claims,
wherein the new security baseline information (50) comprises settings, whether a component (28) of the endpoint device (12) is to be enabled or is to be disabled;
wherein the implemented baseline information (52) comprises settings, whether a component (28) of the endpoint device (12) is enabled or disabled.

6. The method of one of the preceding claims,
wherein the new security baseline information (50) and the currently implemented baseline information (52) are stored in XML format.

7. The method of one of the preceding claims, further comprising the steps of:
reading updated security baseline information (56) from the components (28) of the electronic endpoint device (12) after the new security settings have been implemented in the electronic endpoint device (12);
comparing the new security baseline information (50) and the updated security baseline information (56);
reporting that the implementation of the new security baseline information (50) has failed, when the new security baseline information (50) and the updated security baseline information are not equal (56).

8. The method of one of the preceding claims, further comprising the step of:
regularly checking, whether actual security baseline information (26a) and implemented security baseline information (56) are equal.

9. The method of one of the preceding claims,
wherein components (28) of the endpoint device (12), that have security settings, comprise at least one of a user account, a protocol, a port, a service, an application of the endpoint device.

10. The method of one of the preceding claims,
wherein the steps of the method are performed by a security agent module (22) executed in the electronic endpoint device (12).

11. The method of one of the preceding claims,
wherein the electronic endpoint device (12) is a controller of the industrial control system (10) that is adapted for controlling an actuator (18) of the industrial control system and/or that is adapted for receiving measurement data of a sensor (20) of the industrial control system (10).

12. A computer program, which, when executed by a processor of an electronic endpoint device (12), is adapted for carrying out the steps of the method of claims 1 to 11.

13. A computer-readable medium, in which a computer program according to claim 12 is stored.

14. An electronic endpoint device (12) of an industrial control system (10), which is adapted for performing the method of one of the claims 1 to 11.

15. An industrial control system (10), comprising:
a plurality of electronic endpoint devices (12) associated with sensors and/or actuators of the industrial control system (10);
wherein each electronic endpoint device (12) comprises a security agent module (22) that is adapted for executing the method of one of claims 1 to 11.
